# EUROPÄISCHE PATENTSCHRIFT

(11) **EP 3 188 583 B1**
(45) Veröffentlichungstag und Bekanntmachung des Hinweises auf die Patenterteilung: **04.12.2019**
(21) Anmeldenummer: 15774850.0
(22) Anmeldetag: 01.09.2015
(51) Int. Cl.: A01B 21/08

(54) **VERBINDUNG EINES WERKZEUGHALMES MIT EINER HALMTASCHE**
CONNECTION OF A TOOL LEG TO A LEG BRACKET
LIAISON D'UN BRAS DE RETENUE D'OUTIL À UN ÉLÉMENT RÉCEPTEUR DE BRAS DE RETENUE

(30) Priorität: 02.09.2014 DE 102014112606
(43) Veröffentlichungstag der Anmeldung: 12.07.2017
(73) Patentinhaber: Lemken GmbH & Co. KG, 46519 Alpen (DE)
(72) Erfinder: BODEWIG, Johannes, 40667 Meerbusch (DE); ACHTEN, Georg, 47918 Tönisvorst (DE); HAPPE, Christoph, 46519 Alpen (DE)
(86) Internationale Anmeldenummer: PCT/DE2015/100363
(87) Internationale Veröffentlichungsnummer: WO 2016/034168

(56) Entgegenhaltungen:
- DE-A1- 19 630 079
- DE-U1-202012 002 916
- US-A- 2 430 434
- US-A- 4 738 316

## Beschreibung

Die Erfindung betrifft eine Verbindung eines Werkzeughalmes zur Führung eines landwirtschaftlichen Bodenbearbeitungswerkzeuges mit einer Halmtasche gemäß dem Oberbegriff des Patentanspruches 1. Es ist eine Vielzahl von Verstelleinrichtungen bekannt geworden, um die Anwinkelung eines Bodenbearbeitungswerkzeuges einzustellen. So zeigt das deutsche Gebrauchsmuster DE 20 2012 002 916 U1 eine schwenkbare Blattfeder, an deren Ende eine rotierende Scheibe befestigt ist. Die Blattfeder schwenkt um einen Bolzen und ist an ihrem biegekritischen Querschnitt mit einem Durchbruch versehen, über welchen mit einer Schraube oder einem Steckbolzen die Lage zum Bodenbearbeitungsgerät eingestellt werden kann. Die Offenlegungsschrift DE 19 630 079 A1 beschreibt einen Scheibengrubber mit schwenkbaren, mehrfach angewinkelten, an Werkzeughalmen befestigten Hohlscheiben. Die Werkzeughalme sind über passgenaue Schwenklager zentral verstellbar an einem Rahmen befestigt. Dabei sind die Werkzeugschneiden annähernd unter der Achse der Schwenklager angeordnet. Die deutsche Patentanmeldung DE 10 2007 029 406 A1 schlägt ein Schnellwechselsystem zur formschlüssigen Befestigung von unterschiedlichen Scharträgern an einen Scharstiel vor, wobei ein Einsteckelement durch den Scharstiel verdeckt nicht vom Erdstrom erfasst wird und somit keinem Verschleiß unterliegt. Das US Patent 3 289 772 zeigt einen Scharstiel mit aufgeschobenen Scharträger einen Grubbers, bei dem durch einen optional eingelegten Keil die Winkelstellung des Scharträgers zum Scharstiel verändert werden kann. Zwei Klemmschrauben sichern den Stiel reibschlüssig gegen Herausziehen. Weiterhin zeigt die US-Schrift 2 430 434 einen in fünf Stellungen drehbaren Anschlag für einen Werkzeughalm mit zusätzlich erforderlichem Steckbolzen.
In dem europäischen Patent EP 2 314 139 B1 wird eine Lösung zur kombinierten Wurfwinkel- und Höhenverstellung von Düngereinlegern an einem Pflug vorgestellt. Mit einem eingelegten Keil wird der Düngereinleger in unterschiedliche Positionen ausgerichtet, wobei der Keil durch einen Steckbolzen gegen Herausfallen gesichert wird und ein zweiter Steckbolzen die Höheneinstellung des Düngereinlegers bestimmt.

Aufgabe der Erfindung ist es, eine Verbindung als werkzeuglos bedienbares Schneidwinkelverstellsystem für Bodenbearbeitungswerkzeuge bereitzustellen, welches unter Last kein Lagerspiel aufweist und vorzugsweise mit einem einzigen Arretierungsmittel verstellt oder arretiert werden kann.
Diese Aufgabe wird durch die Merkmale des kennzeichnenden Teiles des Anspruches 1 gelöst. Durch die Anordnung der Anlageflächen des Arretierungsmittels in der Halmtasche in konvergierender, zur Öffnung der Halmtasche hin verjüngender Form keilt sich das Arretierungsmittel unter Last des Bodenbearbeitungswerkzeuges selbsttätig fest. Wird das Bodenbearbeitungswerkzeug entlastet, wie beispielsweise in ausgehobenem Zustand, lässt sich das Arretierungsmittel werkzeuglos und ohne Last von Hand lösen, die Winkelstellung zwischen Werkzeughalm und Halmtasche ändern und die Verbindung wieder sichern. Zur Verstellung und Festlegung unterschiedlicher Lagen des Bodenbearbeitungswerkzeuges, aber auch zum Austausch der Bodenbearbeitungswerkzeuge braucht nur ein einziges Arretierungsmittel bewegt oder eingefügt werden.
Eine alternative Form der Erfindung ist die Anordnung der konvergierenden Anlageflächen für das Arretierungsmittel am Werkzeughalm. Durch diese Bauart kann das Arretierungsmittel formschlüssig in verschiedenen Positionen in Ausnehmungen oder Bohrungen der Halmtasche eingesteckt werden. Unter Last des Bodenbearbeitungswerkzeuges läuft eine der konvergierenden Flächen des Werkzeughalmes auf das feststehende Arretierungsmittel auf und presst den Werkzeughalm mit der gegenüberliegenden Fläche fest und spielfrei in die Berandungsfläche der Halmtasche ein. Dabei laufen die konvergierenden Flächen vorzugsweise in Richtung Halmtaschenende aufeinander zu.
In einer besonderen Erfindungsform ist die jeweils dem Arretierungsmittel auf der anderen Seite des Werkzeughalmes gegenüberliegende, schräge Fläche der Halmtasche als Anlagefläche des Werkzeughalmes ausgebildet. Durch diese Ausführungsform brauchen keine weiteren Anschlagpunkte zur Festlegung der Winkellage des Werkzeughalmes zur Halmtasche vorgesehen werden.
In einer erweiterten Erfindungsform sind die jeweiligen schrägen Flächen der Halmtasche in zumindest zwei unterschiedlich zueinander abgewinkelte oder beabstandete Bereiche unterteilt, wobei ein Bereich dem Arretierungsmittel und der andere Bereich dem Werkzeughalm als Anlagefläche zugeordnet sind. Durch diese Aufteilung kann einerseits ein passender Winkel für die Lage des Werkzeughalmes zur Halmtasche gewählt werden, andererseits auf der jeweils gegenüber gelegenen Seite ein optimaler Anstellwinkel der Anlagefläche für das Arretierungsmittel, welches in die Ausnehmung des Werkzeughalmes eingelassen ist. Ebenso ist eine stegartige Anordnung oder Form der Anlageflächen möglich. Auch gebogene Flächen sind im Sinne der Konvergenz eingeschlossen.
In einer bevorzugten Anordnung beschreiben die Flächen des Werkzeughalmes, welche die Anlage zum Arretierungsmittel bilden, die kürzere Kantenlänge des Querschnittes des Werkzeughalmes. Durch diese Anordnung wird der Querschnitt des Werkzeughalmes auch inneren Bereich der Halmtasche weniger kritisch geschwächt. Die langen Kantenlängen des regulären Werkzeughalmquerschnitts verlaufen durch die Flächen, welche die Gleitflächen zur Bewegung des Werkzeughalmes in der Halmtasche bilden.
In einer besonderen Erfindungsform, in der sich die unterschiedlichen Winkellagen des Werkzeughalmes in der Halmtasche in einer Achse schneiden, welche annähernd auf den Hauptschneidbereich des Bodenbearbeitungswerkzeuges ausgerichtet ist, kann der Schwenkwinkel des Bodenbearbeitungswerkzeuges verstellt werden, ohne dass es zu nennenswertem seitlichen oder vertikalen Versatz im Hauptschneidbereich des Bodenbearbeitungswerkzeuges und somit einer Verminderung seiner Arbeitsqualität kommt. Dabei durchzieht die Achse vorzugsweise den Mittelpunkt oder eine Seitenkante der Öffnung der Halmtasche, in welche der Werkzeughalm eingeschoben wird sowie den Mittelpunkt des Hauptschneidenbereiches des Bodenbearbeitungswerkzeuges bzw. einen Punkt auf dessen Hauptschneidenkante. Die Schnittachse wird durch die Mittelebene des Werkzeughalmes vorgegeben, welche in den unterschiedlichen Winkellagen zur Halmtasche die Schnittachse definiert. Dabei stehen die Schnittachse bzw. die Mittelebenen vorzugsweise senkrecht zu den Gleitflächen der Halmtasche, auf welchen sich der Werkzeughalm innerhalb der Halmtasche bewegt.
In einer speziellen Form der Erfindung ist die Halmtasche dem Bodenbearbeitungswerkzeug zugeordnet. Somit kann das Bodenbearbeitungswerkzeug, welches mit der Halmtasche befestigt ist, auf einfache Art in seiner Winkellage zum Werkzeughalm verändert oder vom Werkzeughalm gelöst werden.
In einer anderen Form der Erfindung ist die Halmtasche dem Tragrahmen eines Bodenbearbeitungsgerätes zugeordnet. Durch diese Anordnung kann die Winkellage des Werkzeughalmes zum Tragrahmen des Bodenbearbeitungsgerätes einfach verändert werden. Mit der Winkellage des Werkzeughalmes ändert sich auch die Anstellung des Bodenbearbeitungswerkzeuges, welches am Werkzeughalm befestigt ist, relativ zum Tragrahmen.
Ein weiterer Vorteil der Erfindung entsteht, wenn die Halmtasche relativ zum Tragrahmen des Bodenbearbeitungsgerätes um eine Achse schwenkbar gelagert ist. Durch diese Ausführungsform kann der Werkzeughalm und somit das Bodenbearbeitungswerkzeug in einem weiteren Freiheitsgrad relativ zum Tragrahmen des Bodenbearbeitungsgerätes eingestellt oder bewegt werden.
In einer verbesserten Erfindungsform wird die Halmtasche oder deren Lagerung relativ zum Tragrahmen durch einen Energiespeicher in einer Endlage gehalten. Durch Verwendung von Federelementen, mit Druck beaufschlagten Hydraulikzylindern, Elastomerkörpern oder anderer, geeigneter Mittel wird - vorzugsweise mit zuvor genannter Schwenklagerung - ein Schutz des Bodenbearbeitungswerkzeuges vor Überlast bereitgestellt, wie beispielsweise in Stein besetzten Böden anzutreffen.
In einer Ausführung ist der Werkzeughalm zumindest in einem Abschnitt elastisch federnd, vorzugsweise als Blattfeder ausgebildet. Somit kann eine ein- oder mehrdimensional wirkende Überlasteinrichtung beispielsweise durch eine speziell geformte Blatt- oder Spiralfeder in dem Werkzeughalm integriert werden bzw. der Werkzeughalm als solche ausgeführt werden.

In einer kostengünstigen Lösung der Erfindung ist die Halmtasche in ihrer Grundform in einem Ur- oder Umformverfahren hergestellt. Bis auf das Bohren von Lagersitzen kann die Herstellung ohne nennenswerte Abtragung von Material hergestellt werden, beispielsweise in Guss-, Druckguss-, Spritzguss-, Schmiede-, Press- oder Sinterverfahren.
Besonders geeignet ist die Erfindung für ein Bodenbearbeitungswerkzeug, welches durch die Verbindung zwischen Werkzeughalm und Halmtasche geführt wird, welches als Pflugkörper, als Zinkenschar oder als rotierendes Scheibenschar ausgebildet ist. Die zuvor genannten Werkzeugformen sind insbesondere darauf angewiesen, je nach Bodenverhältnis, Arbeitsgeschwindigkeit oder Arbeitstiefe in ihrem Anstellwinkel zur Bodenoberfläche und/oder zum Tragrahmen des Bodenbearbeitungsgerätes passend eingestellt zu werden.

Gerade die Verwendung der Verbindung zwischen Werkzeughalm und Halmtasche als Bestandteil einer Vorrichtung zur Schnittwinkelverstellung der Werkzeuge einer Kurzscheibenegge oder eines Pfluges stellt sich als Vorteil heraus. Bei diesen Bodenbearbeitungsgeräten sind eine Vielzahl von Werkzeugen nebeneinander und/oder hintereinander aufgereiht angeordnet. So kann durch die gleichen Handgriffe eine Vielzahl von Werkzeugen nacheinander schnell verstellt oder auch ausgewechselt werden.
Die Erfindung zeichnet sich insbesondere dadurch aus, dass eine Verbindung zwischen Werkzeughalm und Halmtasche eines Bodenbearbeitungsgerätes bereitgestellt wird, welche durch simples Umstecken eines Arretierungsmittels in unterschiedliche Winkellagen festgesetzt werden kann. Durch das Auflaufen des Arretierungsmittels unter Last des Bodenbearbeitungswerkzeuges auf die schräge Fläche der Halmtasche keilt sich der Werkzeughalm in die Halmtasche ein und bildet unter Last einen festen, zumindest nahezu spielfreien Sitz. Die Last des Bodenbearbeitungswerkzeuges auf die Verbindung zwischen Werkzeughalm, Arretierungsmittel und Halmtasche ergibt sich aus dem Widerstand beim Eindringen in und beim Ziehen des Werkzeuges durch den zu bearbeitenden Boden. Wird das Bodenbearbeitungswerkzeug bzw. die Verbindung zwischen Werkzeughalm, Arretierungsmittel und Halmtasche entlastet, wie beispielsweise beim Aushub des Bodenbearbeitungsgerätes, kann die Verbindung leicht durch entnehmen des Arretierungsmittels gelöst oder durch Umstecken in eine andere Lage wieder festgesetzt werden. Zugleich kann ein Satz von Bodenbearbeitungswerkzeugen schnell gegen einen anderen Satz mit anderer Form oder neuen Verschleißteilen ausgewechselt werden. Querschnitt des Werkzeughalmes mit der höchsten Biegebelastung wird dabei nicht durch Ausnehmungen geschwächt. Die selbstzentrierende oder selbsthemmende Funktion der Verbindung ist auf eine weniger passgenaue Ausführung der Werkzeughalme, der Halmtaschen und Arretierungsmittel nebst erforderlicher Ausnehmungen oder Anlageflächen angewiesen, wie dieses bei einer Flansch- oder regulären Steckbolzenlösung der Fall ist. Dabei kann das Arretierungsmittel Formschluss-, Einstell- und Zentrierfunktion in einem Teil vereinen.
Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 Seitenansicht eines Traktorhecks mit angebautem Bodenbearbeitungsgerät,
Fig.2 Perspektive auf eine Verbindung von Halmtasche und Werkzeughalm,
Fig.3 eine ähnliche Perspektive mit teilweise freigestellter Halmtasche

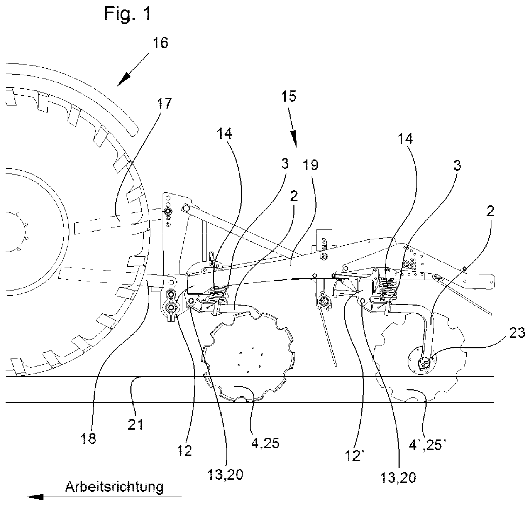

Figur 1 zeigt die Seitenansicht eines Bodenbearbeitungsgerätes 15, hier eine Kurzscheibenegge, welche höhenbeweglich, aushebbar und ggf. auch seitenbeweglich mit Ober- und Unterlenkern 17, 18 eines Traktors 16 verbunden ist, welcher das Bodenbearbeitungsgerät 15 in Arbeitsrichtung zieht. Das Bodenbearbeitungsgerät 15 kann ebenso über eine Zugdeichsel zur Anhängung mit dem Traktor 16 verbunden werden sowie über eine nicht dargestellte Aufsatteleinrichtung, Laufachse oder Packerwalze, beispielsweise zur Tiefenführung des Gerätes, verfügen. Das Bodenbearbeitungsgerät 15 ist mit einer Mehrzahl von in Arbeitsrichtung nebeneinander sowie in Reihen hintereinander angeordneten Bodenbearbeitungswerkzeugen 4, 4' in Form von rotierenden Hohlscheiben 25, 25' versehen. Ebenso sind über die Ausdehnung des Bodenbearbeitungsgerätes 15 verteilte Zinkenwerkzeuge, beispielsweise in Form eines Grubbers oder an einem diagonal zur Arbeitsrichtung verlaufendem Rahmenrohr angeordnete Pflugwerkzeuge denkbar. An einem Rahmen 19 zum Anbau des Bodenbearbeitungsgerätes 15 an den Traktor 16 sind Querrohre als Tragrahmen 12, 12' zur Befestigung mehrerer Halmtaschen 3 angeordnet. Mehrere Lagerkonsolen 20 mit Schwenkachsen 13 sowie Energiespeichern 14 bilden im Zusammenspiel mit den Halmtaschen 3 jeweils ein Überlastelement. Mit ihrem vorderen Ende sind die jeweiligen Werkzeughalme 2 in die Halmtaschen eingeschoben. An dem jeweils anderen Ende der Werkzeughalme befinden sich Lagersitze zur Aufnahme der Gleit- oder Wälzlager sowie Naben zur Befestigung der Hohlscheiben-Bodenbearbeitungswerkzeuge 4, 4', 25, 25'. Zum besseren Bodenantrieb sind die Hohlscheiben 25, 25' gezackt oder profiliert ausgeführt, können aber auch mit einer glatten, geschärften Schnittkante versehen sein. Weitere Einebnungs-, Tiefenführungs- oder Rückverfestigungswerkzeuge sind als Bestandteil des Bodenbearbeitungsgerätes 15 den Bodenbearbeitungswerkzeugen 4, 4' vor- oder nachgelagert. Diese sind beispielsweise aus o.g. Scheibengrubber bekannt und nicht weiter detailliert.

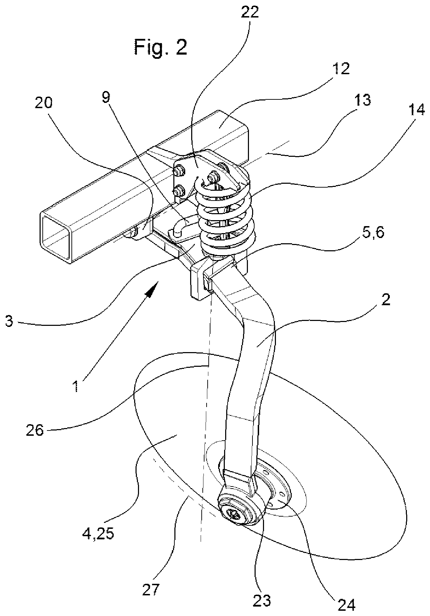

Figur 2 zeigt einen perspektivischen Ausschnitt des Tragrahmens 12 mit einem daran befestigten Bodenbearbeitungswerkzeug 4. Dabei ist die Halmtasche 3 mittels zweier Lagerkonsolen 20 um die Achse 13 beweglich mit dem Tragrahmen 12 verbunden. Die Achse 13 wird durch einen Schraubbolzen mit Gegenmutter gebildet, welcher durch die Lagerkonsolen 20 sowie weitere Lagerbuchsen innerhalb der Halmtaschen 3 gesteckt und mit diesen verspannt wird. Ebenso sind andere Scharnierverbindungen als auch Elastomerlager denkbar, welche beispielsweise ein Vierkantprofil umschließen. Die Achse 13 verläuft hier quer zur Arbeitsrichtung des Bodenbearbeitungsgerätes, kann aber auch in einer anderen Lage ausgerichtet sein. Ein Energiespeicher 14 stützt sich über ein Widerlager 22 beabstandet zur Achse 13 gegen den Tragrahmen 12 ab und drückt die Halmtasche 3 gegen einen Endanschlag nach unten. Der Energiespeicher 14 kann als Spiralfeder, ebenso aber auch durch die zuvor genannten Elastomerlager oder andere Druckkörper, wie Elastomerblöcke oder hydraulisch vorgespannte Druckzylinder gebildet werden. Der Druck des Energiespeichers 14 auf die Halmtasche 3 kann durch unterschiedliche Vorspannung oder einstellbare Endanschläge variiert werden. Am unteren Ende des Werkzeughalmes 2, welcher aus einem Flachstahl mit vorzugsweise rechteckigem Querschnitt gebogen ist, ist ein Lagersitz 23 zur drehbar gelagerten Aufnahme der Nabe 24 angeschweißt oder angeschraubt. Die Lagerung der Nabe 24 erfolgt über abgedichtete Gleit-, Kugel- oder Rollenlager. An die Nabe 24 ist eine Hohlscheibe 25 geflanscht. Das obere Ende des Werkzeughalmes 2 ist in die Öffnung 6 am hinteren Ende 5 der Halmtasche 3 eingeschoben. Dabei passt der rechteckige Querschnitt des Werkzeughalmes 2 nahezu spielfrei in die Öffnung 6 der Halmtasche, wobei aber eine seitliche Schwenkbewegung des Werkzeughalms 2 innerhalb der Kontur der Halmtasche 3 gegeben ist. Die obere und untere Begrenzungsfläche der Halmtasche 3 dienen dabei als Gleitfläche für die Schwenkbewegung des Werkzeughalmes 2, die rechte und linke Fläche 10, 11 als Anlagefläche für das Arretierungsmittel oder eine Seitenfläche des Werkzeughalmes. Dabei erfolgt die Schwenkbewegung des Werkzeughalmes 2 um eine gedachte, neutrale Achse 26, welche durch die Halmtaschenöffnung 6 und den Hauptschneidenbereich 27 des Bodenbearbeitungswerkzeuges 4, welcher hier im vorderen, unteren Bereich der Hohlscheibe 25 verläuft. Bei einem Grubber- oder Pflugschar bildet beispielsweise die Scharspitze den Hauptschneidenbereich. Vorzugsweise bildet eine Seitenkante der Halmtaschenöffnung 6 die neutrale Schwenkachse 26 des Werkzeughalms 2 und somit des Bodenbearbeitungswerkzeugs 4. In diesem biegekritischen Bereich ist der Werkzeughalm 2 ungeschwächt und frei von Ausnehmungen oder Bohrungen. Weiter vorn verfügt der Werkzeughalm 2 über zwei seitliche Ausnehmungen, in welche das Arretierungsmittel 9, hier ein Steckbolzen mit Griff, in eine linke oder rechte Position eingesteckt wird und ein Herausziehen des Werkzeughalmes 2 aus der Halmtasche 3 verhindert. Das Zusammenspiel zwischen Halmtasche 3, Werkzeughalm 2 und Arretierungsmittel 9 wird nachfolgend beschrieben.

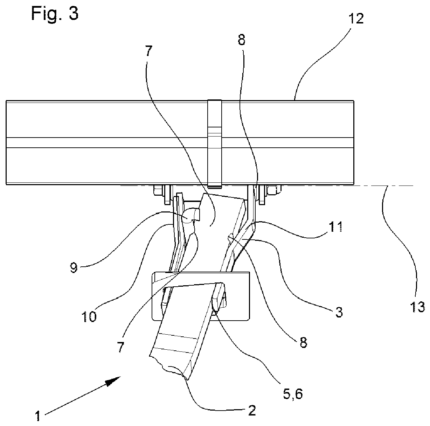

Figur 3 zeigt einen Blick von schräg oben in die Halmtasche 3. Der Übersichtlichkeit halber ist die obere Begrenzungsfläche der Halmtasche 3 nicht dargestellt. Wie bereits in Figur 2 beschrieben, ist der Werkzeughalm 2 durch die rechteckige Halmtaschenöffnung 6 bis vorn in die Halmtasche 3 eingeschoben und schlägt in seiner Endlage gegen das vordere Ende der Halmtasche 6, hier eine Lagerbuchse auf Höhe der Achse 13, an. Der Werkzeughalm 2 ist auf Höhe des Arretierungsmittels 9 jeweils mit einer Ausnehmung 7, 8 in Form eines Halbrunds versehen. In einer dieser Ausnehmungen 7, 8 ist nun das Arretierungsmittel 9 eingesteckt. Wird nun der Werkzeughalm 2 unter Last des Bodenbearbeitungswerkzeuges nach hinten aus der Halmtasche gezogen, so presst sich das Arretierungsmittel 9 je nach Steckposition 7 oder 8 jeweils gegen die rechte oder linke Anschlagfläche 11, 10, welche vorzugsweise einer Innenfläche der Halmtasche 3 entspricht, und keilt den Werkzeughalmen 2 in einer definierten Winkellage in die Halmtasche 3 ein. Steckt man das Arretierungsmittel in die gegenüberliegende Ausnehmung 8, 7, so ergibt sich eine andere Winkellage des Werkzeughalmes 2 gegenüber der Halmtasche 3, welche sich in gleicher Funktion wie oben unter Last verkeilt. Wird das Bodenbearbeitungsgerät nun ausgehoben, kann sich diese Verbindung 1 wieder lockern und das Arretierungsmittel 9 von Hand entnommen werden, um eine andere Lage einzustellen oder den Werkzeughalm 2 samt anhängendem Bodenbearbeitungswerkzeug zu entnehmen oder auszutauschen. Neben einer bevorzugten Halbrundform können die Ausnehmungen 7, 8 des Werkzeughalmes 2 ebenso eine Keil- oder andere Form aufweisen. Die Ausnehmungen 7,8 können materialabtragend, aber auch im Rohteilzuschnitt oder durch Umformen erstellt werden. Ebenso kann das Arretierungsmittel 9 als Steckbolzen neben einer runden auch eine andere, zu den Ausnehmungen 7, 8 oder den Flächen 10, 11 der Halmtaschen 3 korrespondierende Querschnittformen aufweisen. Besonders geeignet als Form der Ausnehmung 7, 8 ist ein Halbrund mit einem Radius größer oder gleich einem Halb des Durchmessers des Arretierungsmittels 9. Dabei liegt der Mittelpunkt des Halbrundes auf der Kante des Werkzeughalmes oder weiter außerhalb, um den Werkzeughalm nicht unnötig im Querschnitt zu schwächen. Weiterhin kann das Arretierungsmittel 9 mit einem Clip, einem Federstecker oder anderen Vorrichtungen gegen Verlieren gesichert werden. Ein aus der Halmtasche 3 überstehendes Ende des Arretierungsmittels 9 kann einfach zu einem Handgriff gebogen werden oder die Funktion einer Verdrehsicherung übernehmen, wie ansatzweise aus Fig. 2 zu erkennen. Der Sichtbarkeit wegen ist das Arretierungsmittel 9 nur teilweise dargestellt, hier in seiner eingeklemmten Position zwischen der Anlagefläche 10 der Halmtasche 3 und der Ausnehmung 7 im Werkzeughalm 2. Vorzugsweise verfügen die untere und die nicht dargestellte obere Begrenzungsfläche der Halmtasche 3, durch welche das Arretierungsmittel 9 durchgesteckt wird, über Durchbrüche, beispielsweise in Form eines Langloches, um eine eingeschränkte Beweglichkeit des Arretierungsmittels entlang der Anlageflächen 10, 11 zu ermöglichen.
Es folgen 3 Blatt mit Zeichnung.

**BEZUGSZEICHENLISTE**

| | |
|---|---|
| 1 | Verbindung |
| 2 | Werkzeughalm |
| 3 | Halmtasche |
| 4 | Bodenbearbeitungswerkzeug |
| 5 | Ende der Halmtasche |
| 6 | Halmtaschenöffnung |
| 7 | Ausnehmung |
| 8 | Ausnehmung |
| 9 | Arretierungsmittel |
| 10 | Fläche |
| 11 | Fläche |
| 12 | Tragrahmen |
| 13 | Achse |
| 14 | Energiespeicher |
| 15 | Bodenbearbeitungsgerät |
| 16 | Traktor |
| 17 | Oberlenker |
| 18 | Unterlenker |
| 19 | Rahmen |
| 20 | Lagerkonsole |
| 21 | Boden, Bodenoberfläche |
| 22 | Widerlager |
| 23 | Lagersitz |
| 24 | Nabe |
| 25 | Hohlscheibe |
| 26 | Achse, Schwenkachse |
| 27 | Hauptschneidenbereich |
| | |

## Patentansprüche

1. Verbindung (1) eines Werkzeughalmes (2) mit einer Halmtasche (3) zur Führung eines landwirtschaftlichen Bodenbearbeitungswerkzeuges (4), wobei der Werkzeughalm (2) an einem ersten Ende von der Halmtasche (3) zumindest teilweise umschlossen ist, wobei die Halmtasche (3) an ihrem Halmtaschenende (5) eine Öffnung (6) zum Einschub und zur Aufnahme des Werkzeughalmes (2) aufweist, welche zumindest annähernd korrespondierend zum Querschnitt des Werkzeughalmes (2) ausgebildet ist, wobei die Halmtasche (3) auf der dem Halmtaschenende (5) gegenüberliegenden Seite einen größeren Querschnitt aufweist, wodurch der Werkzeughalm (2) von einer ersten in eine zweite Winkellage zur Halmtasche (3) bewegt und angeordnet werden kann, wobei der Werkzeughalm (2) Ausnehmungen (7, 8) zur Aufnahme eines Arretierungsmittels (9) aufweist,
**dadurch gekennzeichnet,**
**dass** eine erste und eine zweite Fläche (10, 11) der Halmtasche (3) als Anlagefläche für das Arretierungsmittel (9) in der ersten oder zweiten Winkellage des Werkzeughalmes zumindest teilweise zueinander konvergierend und zur Öffnung (6) der Halmtasche (3) hin in verjüngender Form ausgebildet sind, wobei das Arretierungsmittel (9) als einziges Mittel zur Verstellung und Festlegung unterschiedlicher Winkellagen des Bodenbearbeitungswerkzeuges (4) sowie auch zum Austausch der Bodenbearbeitungswerkzeuge (4) bewegbar oder einfügbar vorgesehen und ausgebildet ist..

2. Verbindung (1) eines Werkzeughalmes (2) mit einer Halmtasche (3) zur Führung eines landwirtschaftlichen Bodenbearbeitungswerkzeuges (4), wobei der Werkzeughalm (2) an einem ersten Ende von der Halmtasche (3) zumindest teilweise umschlossen ist, wobei die Halmtasche (3) an ihrem Halmtaschenende (5) eine Öffnung (6) zum Einschub und zur Aufnahme des Werkzeughalmes (2) aufweist, welche zumindest annähernd korrespondierend zum Querschnitt des Werkzeughalmes (2) ausgebildet ist, wobei der Werkzeughalm (2) in einem Bereich innerhalb der Halmtasche (3) einen kleineren Querschnitt als im Bereich des Halmtaschenendes (5) aufweist, wodurch der Werkzeughalm (2) von einer ersten in eine zweite Winkellage zur Halmtasche (3) bewegt und angeordnet werden kann, wobei die Halmtasche (3) Ausnehmungen zur Aufnahme eines Arretierungsmittels (9) aufweist,
**dadurch gekennzeichnet,**
**dass** eine erste und eine zweite Fläche des Werkzeughalmes (2) als Anlagefläche für das Arretierungsmittel (9) in der ersten oder zweiten Winkellage des Werkzeughalmes zumindest teilweise zueinander konvergierend und in Richtung des Halmtaschenendes (5) auf einander zulaufend ausgebildet sind.

3. Halmtaschenverbindung nach Anspruch 1 oder 2,
**dadurch gekennzeichnet,**
**dass** die jeweils dem Arretierungsmittel (9) auf der anderen Seite des Werkzeughalmes (2) gegenüberliegende Fläche (10, 11) der Halmtasche (3) als Anlagefläche des Werkzeughalmes (2) ausgebildet ist.

4. Halmtaschenverbindung nach Anspruch 1,
**dadurch gekennzeichnet,**
**dass** die jeweiligen Flächen (10, 11) der Halmtasche (3) in zumindest zwei unterschiedlich zueinander abgewinkelte oder beabstandete Bereiche unterteilt sind, wobei ein Bereich dem Arretierungsmittel (9) und der andere Bereich dem Werkzeughalm (2) als Anlagefläche zugeordnet sind.

5. Halmtaschenverbindung nach einem der vorstehenden Ansprüche,
**dadurch gekennzeichnet,**
**dass** die Flächen des Werkzeughalmes (2), welche die Anlage zum Arretierungsmittel (9) bilden, die kürzere Kantenlänge des Querschnittes des Werkzeughalmes (2) beschreiben.

6. Halmtaschenverbindung nach einem der vorstehenden Ansprüche,
**dadurch gekennzeichnet,**
**dass** sich die unterschiedlichen Winkellagen des Werkzeughalmes (2) in der Halmtasche (3) in einer Achse schneiden, welche annähernd auf den Hauptschneidbereich des Bodenbearbeitungswerkzeuges ausgerichtet ist.

7. Halmtaschenverbindung nach einem der vorstehenden Ansprüche,
**dadurch gekennzeichnet,**
**dass** die Halmtasche (3) dem Bodenbearbeitungswerkzeug (4) zugeordnet ist.

8. Halmtaschenverbindung nach einem der vorstehenden Ansprüche,
**dadurch gekennzeichnet,**
**dass** die Halmtasche (3) dem Tragrahmen (12) des Bodenbearbeitungsgerätes (15) zugeordnet ist.

9. Halmtaschenverbindung nach einem der vorstehenden Ansprüche,
**dadurch gekennzeichnet,**
**dass** die Halmtasche (3) relativ zum Tragrahmen (12) des Bodenbearbeitungsgerätes (15) um eine Achse (13) schwenkbar gelagert ist.

10. Halmtaschenverbindung nach einem der vorstehenden Ansprüche,
**dadurch gekennzeichnet,**
**dass** die Halmtasche (3) oder deren Lagerung relativ zum Tragrahmen (12) durch einen Energiespeicher (14) in einer Endlage gehalten wird.

11. Halmtaschenverbindung nach einem der vorstehenden Ansprüche,
**dadurch gekennzeichnet,**
**dass** der Werkzeughalm (2) zumindest in einem Abschnitt elastisch federnd, vorzugsweise als Blattfeder ausgebildet ist.

12. Halmtaschenverbindung nach einem der vorstehenden Ansprüche,
**dadurch gekennzeichnet,**
**dass** die Halmtasche (3) in ihrer Grundform in einem Ur- oder Umformverfahren hergestellt ist.

13. Halmtaschenverbindung nach einem der vorstehenden Ansprüche,
**dadurch gekennzeichnet,**
**dass** das Bodenbearbeitungswerkzeug (4), welches durch die Verbindung (1) zwischen Werkzeughalm (2) und Halmtasche (3) geführt wird, als Pflugkörper, als Zinken- oder Flügelschar oder als rotierendes Scheibenschar ausgebildet ist.

14. Halmtaschenverbindung nach einem der vorstehenden Ansprüche,
**dadurch gekennzeichnet,**
**dass** die Verbindung (1) zwischen Werkzeughalm (2) und Halmtasche (3) als Bestandteil einer Vorrichtung zur Schnittwinkelverstellung einer Kurzscheibenegge, eines Grubbers, Tiefenlockerers oder eines Pfluges ausgeführt ist.

## Claims

1. Connection (1) of a tool stalk (2) to a tool bracket (3) for guiding an agricultural soil working tool (4), wherein the tool stalk (2) is at least partially enclosed at a first end by the tool bracket (3), wherein the tool bracket (3) has at its tool bracket end (5) an opening (6) for insertion and for receiving the tool stalk (2), which is formed at least approximately corresponding to the cross-section of the tool stalk (2), the tool bracket (3) having a larger cross-section on the side opposite the tool bracket end (5), as a result of which the tool stalk (2) can be moved and arranged from a first to a second angular position relative to the tool bracket (3), the tool stalk (2) having recesses (7, 8) for receiving a locking means (9),
**characterized**
**in that** a first and a second surface (10, 11) of the tool bracket (3) are provided and constructed as abutment surfaces for the locking means (9) in the first or second angular position of the tool stalk at least partially converging towards one another and in a tapering form towards the opening (6) of the tool bracket (3), the locking means (9) being provided and designed as the only means for adjusting and fixing different angular positions of the soil working tool (4) and also for exchanging the soil working tools (4) in a movable or insertable manner.

2. Connection (1) of a tool stalk (2) to a tool bracket (3) for guiding an agricultural soil working tool (4), wherein the tool stalk (2) is at least partially enclosed at a first end by the tool bracket (3), wherein the tool bracket (3) has at its tool bracket end (5) an opening (6) for insertion and for receiving the tool stalk (2), which is formed at least approximately corresponding to the cross-section of the tool stalk (2), the tool stalk (2) having a smaller cross-section in a region within the tool bracket (3) than in the region of the end (5) of the leg bracket, as a result of which the tool stalk (2) can be moved and arranged from a first to a second angular position relative to the tool bracket (3), the tool bracket (3) having recesses for receiving a locking means (9),
**characterized**
**in that** a first and a second surface of the tool stalk (2) are designed as abutment surfaces for the locking means (9) in the first or second angular position of the tool stalk at least partially converging towards one another and converging towards one another in the direction of the tool bracket end (5).

3. Tool bracket connection according to claim 1 or 2,
**characterized**
**in that** the surface (10, 11) of the tool bracket (3) which is in each case opposite the locking means (9) on the other side of the tool stalk (2) is designed as a contact surface of the tool stalk (2).

4. Tool bracket connection according to claim 1,
**characterized**
**in that** the respective surfaces (10, 11) of the tool bracket (3) are subdivided into at least two regions which are angled or spaced apart from one another in different ways, one region being assigned to the locking means (9) and the other region being assigned to the tool stalk (2) as a contact surface.

5. Tool bracket connection according to one of the previous claims,
**characterized**
**in that** the surfaces of the tool stalk (2), which form the abutment for the locking means (9), describe the shorter edge length of the cross-section of the tool stalk (2).

6. Tool bracket connection according to one of the previous claims,
**characterized**
**in that** the different angular positions of the tool stalk (2) in the tool bracket (3) intersect in an axis which is aligned approximately with the main cutting region of the soil working tool.

7. Tool bracket connection according to one of the previous claims,
**characterized**
**in that** the tool bracket (3) is assigned to the soil working tool (4).

8. Tool bracket connection according to one of the previous claims,
**characterized**
**in that** the tool bracket (3) is assigned to the supporting frame (12) of the soil working implement (15).

9. Tool bracket connection according to one of the previous claims,
**characterized**
**in that** the tool bracket (3) is mounted pivotably about an axis (13) relative to the supporting frame (12) of the soil working implement (15).

10. Tool bracket connection according to one of the previous claims,
**characterized**
**in that** the tool bracket (3) or its bearing relative to the supporting frame (12) is held in an end position by an energy accumulator (14).

11. Tool bracket connection according to one of the previous claims,
**characterized**
**in that** the tool stalk (2) is elastically resilient, preferably in the form of a leaf spring, at least in one section.

12. Tool bracket connection according to one of the previous claims,
**characterized**
**in that** the tool bracket (3) is produced in its basic form in a casting or forming process.

13. Tool bracket connection according to one of the previous claims,
**characterized**
**in that** the soil working tool (4), which is guided through the connection (1) between tool stalk (2) and tool bracket (3), is designed as a plough body, as a tine or wing share or as a rotating disc share.

14. Tool bracket connection according to one of the previous claims,
**characterized**
**in that** the connection (1) between tool stalk (2) and tool bracket (3) is designed as a component of a device for adjusting the cutting angle of a compact disc harrow, a cultivator, a depth loosener or a plough.

## Revendications

1. Connexion (1) d'une tige d'outil (2) à une console d'étançon (3) pour guider un outil de travail du sol agricole (4), dans laquelle la tige d'outil (2) est au moins partiellement entourée à une première extrémité par la console d'étançon (3), la console d'étançon (3) ayant à son extrémité (5) une ouverture (6) pour insérer et pour recevoir la tige d'outil (2), qui est formée au moins approximativement correspondant à la section transversale de la tige d'outil (2), la console d'étançon (3) ayant une plus grande section transversale du côté opposé à l'extrémité de la console d'étançon (5), grâce à quoi la tige d'outil (2) peut être déplacée et disposée d'une première à une deuxième position angulaire relativement à la console d'étançon (3), la tige d'outil (2) ayant des évidements (7, 8) pour recevoir un moyen de blocage (9),
**caractérisée**
**en ce qu'**une première et une deuxième surface (10, 11) de la console d'étançon (3) sont prévues et réalisées en tant que surfaces de butée pour les moyens de verrouillage (9) dans la première ou la deuxième position angulaire de la tige de l'outil convergeant au moins partiellement l'une vers l'autre et sous une forme effilée vers l'ouverture (6) de la poche (3), les moyens de blocage (9) étant prévus et réalisés comme seuls moyens pour ajuster et fixer différentes positions angulaires de l'outil (4) et pour changer les outils (4) pour travailler le sol, mobiles ou à insérer, également.

2. Connexion (1) d'une tige d'outil (2) à une console d'étançon (3) pour guider un outil de travail du sol agricole (4), dans laquelle la tige d'outil (2) est au moins partiellement entourée à une première extrémité par la console d'étançon (3), la console d'étançon (3) ayant à son extrémité (5) une ouverture (6) pour insérer et pour recevoir la tige d'outil (2), qui est formée au moins approximativement correspondant à la section transversale de la tige d'outil (2), la tige d'outil (2) ayant une section transversale plus petite dans une zone à l'intérieur de la console d'étançon (3) que dans la zone de l'extrémité (5) de la console d'étançon, grâce à quoi la tige d'outil (2) est mobile et disposée depuis une première vers une deuxième position angulaire relativement à la console d'étançon (3), la console d'étançon (3) ayant des creux pour recevoir un moyen de blocage (9),
**caractérisée**
**en ce qu'**une première et une deuxième surfaces de la tige d'outil (2) sont conçues en tant que surfaces d'appui pour les moyens de blocage (9) dans la première ou la deuxième position angulaire de la tige d'outil convergeant au moins partiellement l'une vers l'autre et convergeant l'une vers l'autre en direction de l'extrémité (5) du console d'étançon.

3. Connexion de la console d'étançon selon la revendication 1 ou 2,
**caractérisée**
**en ce que** la surface (10, 11)de la console d'étançon (3), qui est à chaque fois opposée aux moyens de blocage (9) de l'autre côté de la tige d'outil (2), est conçue comme une surface de contact de la tige d'outil (2).

4. Connexion de la console d'étançon selon la revendication 1,
**caractérisée**
**en ce que** les surfaces respectives (10, 11) de la console d'étançon (3) sont subdivisées en au moins deux zones qui sont inclinées ou espacées l'une de l'autre de manière différente, une zone étant affectée aux moyens de blocage (9) et l'autre zone étant affectée à la tige (2) de l'outil comme surface de contact.

5. Connexion de la console d'étançon selon l'une des revendications ci-dessus,
**caractérisée**
**en ce que** les surfaces de la tige d'outil (2), qui forment la butée du moyen de blocage (9), décrivent la longueur de bord la plus courte de la section transversale de la tige d'outil (2).

6. Connexion de la console d'étançon selon l'une des revendications ci-dessus,
**caractérisée**
**en ce que** les différentes positions angulaires de la tige d'outil (2) dans la console d'étançon (3) se coupent selon un axe qui est approximativement aligné avec la zone de coupe principale de l'outil de travail du sol.

7. Connexion de la console d'étançon selon l'une des revendications ci-dessus,
**caractérisée**
**en ce que** la console d'étançon (3) est affectée à l'outil de travail du sol (4).

8. Connexion de la console d'étançon selon l'une des revendications ci-dessus,
**caractérisée**
**en ce que** la console d'étançon (3) est affectée au châssis porteur (12) de la machine de travail du sol (15).

9. Connexion de la console d'étançon selon l'une des revendications ci-dessus,
**caractérisée**
**en ce que** la console d'étançon (3) est montée pivotante autour d'un axe (13) relativement par rapport au châssis porteur (12) de la machine de travail du sol (15).

10. Connexion de la console d'étançon selon l'une des revendications ci-dessus,
**caractérisée**
**en ce que** la console d'étançon (3) ou son logement par rapport au châssis porteur (12) est maintenu en position finale par un accumulateur d'énergie (14).

11. Connexion de la console d'étançon selon l'une des revendications ci-dessus,
**caractérisée**
**en ce que** la tige d'outil (2) est élastique, de préférence sous la forme d'un ressort à lame, au moins dans une section.

12. Connexion de la console d'étançon selon l'une des revendications ci-dessus,
**caractérisée**
**en ce que** la console d'étançon (3) est produite sous sa forme de base dans un procédé de moulage ou de formage.

13. Connexion de la console d'étançon selon l'une des revendications ci-dessus,
**caractérisée**
**en ce que** l'outil de travail du sol (4), qui est guidé à travers la connexion (1) entre la tige d'outil (2) et la console d'étançon (3), est réalisé sous la forme d'un corps de charrue, d'un soc à dents ou à ailes ou d'un soc de disque rotatif.

14. Connexion de la console d'étançon selon l'une des revendications ci-dessus,
**caractérisée**
**en ce que** la connexion (1) entre la tige d'outil (2) et la console d'étançon (3) est réalisée en tant que composant d'un dispositif de réglage de l'angle de coupe d'une déchaumeur à disques herse à disques courte, d'un cultivateur, d'un sous-soleur ou d'une charrue.
